# FASCICULE DE BREVET EUROPEEN

(11) **EP 2 794 293 B1**
(45) Date de publication et mention de la délivrance du brevet: **07.09.2016**
(21) Numéro de dépôt: 12801767.0
(22) Date de dépôt: 18.12.2012
(51) Int. Cl.: B60C 9/08, D07B 1/06, B60C 9/00, B60C 9/20

(54) **PNEUMATIQUE COMPORTANT DES CABLES D'ARMATURE DE CARCASSE PRESENTANT UNE FAIBLE PERMEABILITE, ET DES FILS TEXTILES ASSOCIES A L'ARMATURE DE CARCASSE**
REIFEN MIT SEILEN ZUR VERSTÄRKUNG DER KARKASSE MIT NIEDRIGER PERMEABILITÄT UND TEXTILGARNE IM ZUSAMMENHANG MIT DER KARKASSENVERSTÄRKUNG
TIRE COMPRISING CABLES FOR REINFORCING THE CARCASS HAVING LOW PERVIOUSNESS, AND TEXTILE THREADS ASSOCIATED WITH THE CARCASS REINFORCEMENT

(30) Priorité: 19.12.2011 FR 1161888
(43) Date de publication de la demande: 29.10.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: CAFFEAU, Charlotte, F-63040 Clermont-Ferrand Cedex 9 (FR); NOEL, Sébastien, F-63040 Clermont-Ferrand Cedex 9 (FR); JAULT, Bernard, F-63040 Clermont-Ferrand Cedex 9 (FR)
(74) Mandataire: Le Cam, Stéphane Georges Elie
(86) Numéro de dépôt international: PCT/EP2012/075986
(87) Numéro de publication internationale: WO 2013/092609

(56) Documents cités:
- FR-A1- 2 940 183
- FR-A1- 2 940 184

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier est pénalisée. Pour autoriser un voire deux rechapages de tels pneumatiques afin d'allonger leur durée de vie, il est nécessaire de conserver une structure et notamment une armature de carcasse dont les propriétés d'endurance sont suffisantes pour supporter lesdits rechapages.

Les roulages prolongés dans des conditions particulièrement sévères des pneumatiques ainsi construits font effectivement apparaître des limites en termes d'endurance de ces pneumatiques.

Les éléments de l'armature de carcasse sont notamment soumis à des contraintes de flexion et compression lors des roulages qui vont à l'encontre de leur endurance. Les câbles qui constituent les éléments de renforcement des couches de carcasse sont en effet soumis à des contraintes importantes lors du roulage des pneumatiques, notamment à des flexions ou variations de courbure répétées induisant au niveau des fils des frottements, et donc de l'usure, ainsi que de la fatigue ; Ce phénomène est qualifié de "fatigue-fretting".

Pour remplir leur fonction de renforcement de l'armature de carcasse du pneumatique, lesdits câbles doivent tout d'abord présenter une bonne flexibilité et une endurance élevée en flexion, ce qui implique notamment que leurs fils présentent un diamètre relativement faible, de préférence inférieur à 0,28 mm, plus préférentiellement inférieur à 0,25 mm, plus petit généralement que celui des fils utilisés dans les câbles conventionnels pour les armatures de sommet des pneumatiques.

Les câbles de l'armature de carcasse sont également sujets à des phénomènes dits de "fatigue-corrosion" dus à la nature même des câbles qui favorisent le passage voire drainent des agents corrosifs tels que l'oxygène et l'humidité. En effet, l'air ou l'eau qui pénètrent dans le pneumatique par exemple lors d'une dégradation lors d'une coupure ou plus simplement du fait de la perméabilité, même faible de la surface intérieur du pneumatique, peuvent être conduits par les canaux formés au sein des câbles du fait même de leur structure.

Tous ces phénomènes de fatigue que l'on regroupe généralement sous le terme générique de "fatigue-fretting-corrosion" sont à l'origine d'une dégénérescence progressive des propriétés mécaniques des câbles et peuvent affecter, pour les conditions de roulage les plus sévères, la durée de vie de ces derniers.

Pour améliorer l'endurance de ces câbles de l'armature de carcasse, il est notamment connu d'augmenter l'épaisseur de la couche de caoutchouc qui forme la paroi interne de la cavité du pneumatique pour limiter au mieux la perméabilité de ladite couche. Cette couche est habituellement pour partie composée de butyle de façon à augmenter l'étanchéité du pneumatique. Ce type de matériau présente l'inconvénient d'augmenter le coût du pneumatique.

Il est encore connu de modifier la construction desdits câbles afin notamment d'augmenter leur pénétrabilité par le caoutchouc, et ainsi limiter voire éliminer le passage des agents oxydants par les canaux formés au sein des câbles. Des pneumatiques ainsi réalisés ont mis en évidence, des problèmes d'apparition de poche d'air lors de la fabrication du pneumatique.

En effet, les différentes étapes de fabrication conduisent à la formation de poches d'air occlus. Dans le cas de pneumatiques comportant une armature de carcasse formée de câbles dont la structure forme des canaux pouvant conduire l'air, ces poches d'air disparaissent du fait de la diffusion de l'air dans les matériaux notamment au travers desdits canaux existant au sein des câbles. Dans le cas de pneumatiques comportant une armature de carcasse formée de câbles dont la structure est fortement pénétrée par le caoutchouc, ces poches d'air subsistent à l'issue des étapes de fabrication. Il apparaît uniquement un déplacement de ces poches d'air durant l'étape de cuisson du pneumatique, celles étant déplacées vers des zones où s'exerce une faible pression. Le déplacement de l'air se fait le long de l'armature de carcasse suivant des passages existant entre les éléments de renforcement, les couches de mélange caoutchouteux couvrant les éléments de renforcement formant des zones de renfoncement parallèles aux éléments de renforcement avant l'étape de cuisson du pneumatique. Ces zones de renfoncement autorisent ainsi l'air à se déplacer légèrement en fonction de la pression qui s'exerce sur les régions où se trouvent les poches d'air. La pression ou les variations de pression interviennent notamment lors de l'étape de cuisson du pneumatique ou bien durant l'étape de conformation si celle-ci existe.

L'apparition de ces poches d'air est le plus souvent rédhibitoire selon leur localisation et peuvent nécessiter la mise au rebus des pneumatiques, celles-ci pouvant devenir des zones de fragilité du pneumatique. Les coûts de fabrication deviennent alors inacceptables du simple fait des mauvais rendements en production.

Il a par ailleurs déjà été proposé des solutions consistant en la mise en place des fils textiles associés sur au moins une couche de l'armature de carcasse. De tels fils peuvent permettre de drainer l'air occlus lors de la fabrication du pneumatique et conduit ainsi à une productivité supérieure à celle évoquée précédemment et donc à des coûts de fabrication plus intéressants. De telles solutions sont par exemple décrites dans les demandes de brevet WO10/072463 et WO10/072464.

Il s'avère toutefois que, dans des conditions de roulage particulièrement sévères notamment en termes de charge et température, des pneumatiques ainsi réalisés présentent des performances en matière d'endurance moindres comparées à celles de pneumatiques ne comportant pas de tels fils textiles associés sur au moins une couche de l'armature de carcasse.

Les inventeurs se sont ainsi donnés pour mission de fournir des pneumatiques pour véhicules lourds de type "Poids-Lourds", dont les performances d'usure sont conservées pour des usages routiers et dont les performances notamment d'endurance sont améliorées notamment au regard des phénomènes de "fatigue-corrosion" ou de "fatigue-fretting-corrosion", quelles que soient les conditions de roulage et dont le coût de fabrication reste acceptable.

Ce but a été atteint selon l'invention par un pneumatique à armature de carcasse radiale, constituée d'au moins une couche d'éléments de renforcement métalliques, ledit pneumatique comprenant une armature de sommet, elle-même coiffée radialement d'une bande de roulement, ladite bande de roulement étant réunie à deux bourrelets par l'intermédiaire de deux flancs, les éléments de renforcement métalliques d'au moins une couche de l'armature de carcasse étant des câbles, avantageusement non frettés, présentant au test dit de perméabilité un débit inférieur à 20 cm³/mn, au moins une couche de l'armature de carcasse étant pourvue sur au moins une face de fils textiles présentant au test dit de perméabilité un débit compris entre 1 et 3 cm³/mn.

Selon un mode de réalisation préféré de l'invention, les fils textiles présentent un diamètre compris entre 0.2 et 0.35 mm.

La mesure du diamètre des fils textiles est réalisée sur un micromètre laser commercialisée sous le nom laser Z-Mike, série 1200. La mesure est effectuée avec une prétension appliquée sur le fil et calculée sur la base de 0.5 cN/Tex.

Les fils textiles sont avantageusement des fils qui ne confèrent aucune ou quasiment aucune propriété mécanique au pneumatique, tels que des fils de coton. Les fils textiles présentent avantageusement des propriétés drainantes de l'air. En outre, l'augmentation de la masse globale du pneumatique du fait de la présence de ces fils textiles est tout à fait négligeable.

Avantageusement encore, les directions principales des fils textiles sont parallèles entre elles.

Les fils textiles sont avantageusement mis en place sur la surface axialement extérieure dans les flancs de l'armature de carcasse. Dans le cas d'un pneumatique comportant des tringles autour desquelles l'armature de carcasse forme un retournement, les fils textiles sont avantageusement mis en place sur la surface qui vient au contact de la tringle. Ce positionnement est particulièrement avantageux pour assurer une évacuation complète des poches d'air qui se forment lors de la fabrication du pneumatique, celles-ci apparaissant essentiellement sur la surface axialement et/ou radialement extérieure de l'armature de carcasse lors de la fabrication.

Des fils textiles peuvent encore être mis en place sur les deux faces d'une couche d'armature de carcasse.

Dans le cas d'une armature de carcasse comportant plusieurs couches d'éléments de renforcement, chacune desdites couches peut comporter des fils textiles sur au moins une face.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Dans le cas des fils textiles, la même mesure va permettre d'évaluer la capacité desdits fils textiles à évacuer l'air avant que ceux-ci ne soient pénétrés par les mélanges caoutchouteux lors de la cuisson du pneumatique.

Concernant les câbles, le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Concernant les fils textiles, le test est réalisé sur des fils qui n'ont pas été imprégnés de caoutchouc vulcanisé.

Le test est réalisé sur une éprouvette de mélange caoutchouteux cru dans laquelle on place un fil textile. L'éprouvette est réalisée par un empilement de deux couches de mélange caoutchouteux de dimension 6x12 mm et d'épaisseur 3 mm entre lesquelles est déposé le fil avec une prétension inférieure à 0,5 N pour assurer sa rectitude. Une pression est exercée pour assurer une jointure étanche des deux couches de mélange caoutchouteux. L'éprouvette forme ainsi un parallélépipède de dimension 6x6x12 mm. Le fil est sectionné au niveau des faces de l'éprouvette.

La mesure s'apparente ensuite de celle réalisé sur les câbles et décrites précédemment. Le zéro est établi par une mesure sur une éprouvette ne comportant pas de fil.

Concernant les câbles, ce test de perméabilité constitue un moyen simple de mesure indirecte du taux de pénétration du câble par une composition de caoutchouc. Le débit mesuré est d'autant plus faible que le taux de pénétration du câble par le caoutchouc est élevé.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de touts les rapports de longueurs de mélange caoutchouteux sur les longueurs des échantillons ainsi déterminés est ensuite effectuée pour définir le taux de pénétration du câble.

Les inventeurs ont su mettre en évidence qu'un pneumatique ainsi réalisé selon l'invention conduit à des améliorations en termes de compromis endurance et coûts de fabrication très intéressants. En effet, les câbles de l'armature de carcasse présentant au test dit de perméabilité un débit inférieur à 20 cm³/mn permettent de limiter les risques liés à la corrosion. En outre, la présence des fils textiles présentant au test dit de perméabilité un débit compris entre 1 et 3 cm³/mn associés à au moins une couche de l'armature de carcasse permettent de drainer l'air occlus lors de la fabrication du pneumatique et donc conduit à une productivité supérieure à celle évoquée précédemment et donc à des coûts plus intéressants.

Les inventeurs ont encore su mettre en évidence que la présence des fils textiles présentant au test dit de perméabilité un débit supérieur à 1 cm³/mn est nécessaire pour assurer le drainage de l'air occlus lors de la fabrication du pneumatique. Par contre, des fils textiles présentant au test dit de perméabilité un débit supérieur à 3 cm³/mn ne doivent pas être utilisés au risque de nuire à l'endurance du pneumatique. En effet, il est apparu que des fils textiles présentant au test dit de perméabilité un débit supérieur à 3 cm³/mn peuvent conduire à des apparitions de fissuration des mélanges caoutchouteux dans certaines conditions de roulage. Les inventeurs interprètent cette amélioration de l'endurance du pneumatique quelles que soient les conditions de roulage par une inaptitude des fils textiles présentant au test dit de perméabilité un débit inférieur à 3 cm³/mn à créer des poches d'air et/ou d'humidité pouvant se localiser dans des zones favorisant l'oxydation des mélanges notamment du fait des déformations excessives subies par le pneumatique dans des conditions de roulage particulièrement sévères.

Selon un premier mode de réalisation de l'invention, les fils textiles présentant au test dit de perméabilité un débit compris entre 1 et 3 cm³/mn sont parallèles entre eux et orientés selon une direction parallèle à celle des éléments de renforcement métalliques de ladite au moins une couche de l'armature de carcasse.

De préférence encore selon ce premier mode de réalisation de l'invention, le rapport du pas entre deux fils textiles sur le pas entre les éléments de renforcement de ladite au moins une couche de l'armature de carcasse est supérieur à 10.

Le pas entre deux fils textiles est mesuré selon une direction perpendiculaire à la direction desdits fils textiles. Le pas entre les éléments de renforcement de ladite au moins une couche de l'armature de carcasse est mesuré selon une direction perpendiculaire à la direction desdits éléments de renforcement de ladite au moins une couche de l'armature de carcasse.

Selon un deuxième mode de réalisation de l'invention, les fils textiles présentant au test dit de perméabilité un débit compris entre 1 et 3 cm³/mn sont orientés principalement selon une direction parallèle à celle des éléments de renforcement métalliques de ladite au moins une couche de l'armature de carcasse et sont ondulés autour de cette direction principale.

Les inventeurs ont su mettre en évidence que l'ondulation des fils textiles peut permettre d'optimiser, notamment par rapport à des fils rectilignes, la probabilité pour l'air occlus de rencontrer un « drain » soit dès la formation d'une poche d'air, soit lors d'un déplacement de ladite poche d'air selon une direction parallèle aux éléments de renforcement de la couche d'armature de carcasse durant les étapes de fabrication du pneumatique comme il l'a été évoqué précédemment.

Avantageusement selon ce deuxième mode de réalisation de l'invention, les ondulations des fils textiles sont en phase les unes avec les autres.

Selon ce deuxième mode de réalisation de l'invention, le rapport du pas entre deux fils textiles sur l'amplitude d'ondulation est avantageusement compris entre 0.5 et 1. Un tel rapport permet d'optimiser la zone occupée par les fils textiles sur la couche d'armature de carcasse selon la direction perpendiculaire à la direction principale de pose desdits fils et donc perpendiculaire à la direction des éléments de renforcement de la couche d'armature de carcasse. Une telle occupation de ladite zone permet d'assurer le drainage de l'air sur la totalité de la surface de la couche d'armature de carcasse.

Le pas entre deux fils textiles est mesuré selon une direction perpendiculaire à la direction principale desdits fils textiles et donc perpendiculaire à la direction des éléments de renforcement de ladite au moins une couche de l'armature de carcasse.

De préférence encore selon ce deuxième mode de réalisation de l'invention, le rapport du pas entre deux fils textiles sur le pas entre les éléments de renforcement de ladite au moins une couche de l'armature de carcasse est supérieur à 10. De même que précédemment, l'augmentation du nombre de fils textiles par rapport au nombre d'éléments de renforcement de la couche d'armature de carcasse permet d'assurer un meilleur drainage pour un coût modéré. La pose des fils textiles ayant un coût le nombre de fils posés doit rester limité.

De préférence encore, le rapport de la période d'ondulation sur l'amplitude d'ondulation est compris entre 5 et 20. Un tel rapport conduit à une ondulation des fils textiles qui va notamment permettre d'éviter les risques de casse des fils textiles durant les différentes phases de fabrication du pneumatique du fait des contraintes imposées. La valeur de 20 garantit un drainage satisfaisant, des périodes trop importantes pouvant conduire à un risque de ne pas présenter de drain (fil textile) dans une zone ou l'air occlus est présent ou même se déplace.

Avantageusement encore, le pas entre les fils textiles est constant et l'amplitude et la période d'ondulation sont constantes.

Selon un troisième mode de réalisation de l'invention, les fils textiles présentant au test dit de perméabilité un débit compris entre 1 et 3 cm³/mn sont orientés principalement selon une direction rectilignes et lesdits fils textiles forment un angle avec la direction des éléments de renforcement métalliques de ladite au moins une couche de l'armature de carcasse supérieur à 10°, et de préférence supérieur à 25°.

Selon ce troisième mode de réalisation de l'invention, l'angle formé par lesdits fils textiles avec la direction des éléments de renforcement métalliques de ladite au moins une couche de l'armature de carcasse est avantageusement supérieur à 45° et de préférence encore supérieur à 65°. Des angles inférieurs à ces valeurs nécessitent un nombre plus important de fils textiles pour assurer une évacuation optimum des poches d'air occlus. En effet, des angles supérieurs à ces valeurs sont plus adaptés avec un nombre de fils inférieur et donc un pas entre les fils plus grands pour assurer une évacuation optimale des poches d'air occlus. L'optimum en termes de nombre de fils correspond à un angle formé par lesdits fils textiles avec la direction des éléments de renforcement métalliques de ladite au moins une couche de l'armature de carcasse égal à 90°. Toutefois les contraintes de fabrication peuvent imposer des angles inférieurs pour assurer une productivité satisfaisante en considérant que les fils textiles sont avantageusement mis en place lors de la fabrication de la couche d'armature de carcasse. Au cas par cas, l'homme du métier déterminera le meilleur compromis entre le nombre de fils textiles nécessaires et l'angle de pose de ceux-ci.

De préférence encore, le rapport du pas entre deux fils textiles selon ce troisième mode de réalisation de l'invention, mesuré selon une direction parallèle à la direction des éléments de renforcement de ladite au moins une couche de l'armature de carcasse, sur le pas entre les éléments de renforcement de ladite au moins une couche de l'armature de carcasse est supérieur à 10. De même qu'évoqué précédemment l'augmentation du nombre de fils textiles par rapport au nombre d'éléments de renforcement de la couche d'armature de carcasse permet d'assurer un meilleur drainage pour un coût modéré. La pose des fils textiles ayant un coût le nombre de fils posés doit toutefois rester limité.

De préférence encore selon ce troisième mode de réalisation de l'invention, au moins une couche de l'armature de carcasse est pourvue sur au moins une face d'au moins deux couches de fils textiles d'orientation rectilignes, lesdits fils textiles étant croisés d'une couche à la suivante. Un tel arrangement de fils textiles peut autoriser un drainage des poches d'air occlus plus sûr pour un nombre de fils donnés et donc avec des arrangements de fils présentant des pas entre les fils plus importants.

Les inventeurs ont encore su mettre en évidence que l'efficacité des fils textiles pour évacuer l'air occlus lors de la fabrication du pneumatique réside notamment dans le fait que ces fils sont posés nus, c'est-à-dire non enrobés d'un mélange polymérique tel que du caoutchouc, et qu'ils peuvent ainsi capter l'air et/ou l'humidité sur toute leur longueur pour ensuite le et/ou la drainer. En effet, des fils ou bien des tissus textiles enrobés de caoutchouc ou bien une nappe de caoutchouc comportant des fils textiles ou un tissu textile n'auraient absolument pas le même effet, seules les extrémités des fils textiles pouvant être au contact des poches d'air occlus. La présence d'une poche d'air sur une zone d'un fil textile enrobé de caoutchouc ne pourrait pas être drainée. De façon à ne pas conserver de poches d'air occlus après la fabrication du pneumatique, le drainage de ces poches d'air doit pouvoir s'effectuer très rapidement, notamment durant l'étape de vulcanisation. Des fils textiles enrobés de caoutchouc ne peuvent pas assurer une telle fonction, la présence d'une matière polymérique freinant la diffusion de l'air et/ou de l'humidité.

Par contre, après vulcanisation, les fils textiles selon l'invention sont alors noyés dans la masse caoutchouteuse du pneumatique. Ils conservent une efficacité pour le drainage de traces d'air et/ou d'humidité pouvant provenir par exemple de lésions accidentelles en surface du pneumatique ou bien de l'air sous pression au sein de la cavité. Les quantités à drainer sont alors beaucoup plus faibles et le drainage s'effectue sur des durées beaucoup plus longues, ces traces d'air et/ou d'humidité apparaissant lentement par des phénomènes de diffusion au travers des masses caoutchouteuses.

Selon une variante avantageuse de l'invention, les éléments de renforcement métalliques d'au moins une couche de l'armature de carcasse sont des câbles à au moins deux couches, au moins une couche interne étant gainée d'une couche constituée d'une composition polymérique telle qu'une composition de caoutchouc non réticulable, réticulable ou réticulée, de préférence à base d'au moins un élastomère diénique.

Selon un mode de réalisation préféré de l'invention, les câbles de l'armature de carcasse présentent au test dit de perméabilité un débit inférieur à 10 cm³/mn et de préférence encore inférieur à 2 cm³/mn.

L'invention propose encore un pneumatique à armature de carcasse radiale, constituée d'au moins une couche d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, les éléments de renforcement métalliques d'au moins une couche de l'armature de carcasse étant des câbles, avantageusement non frettés, à au moins deux couches, au moins une couche interne étant gainée d'une couche constituée d'une composition polymérique telle qu'une composition de caoutchouc non réticulable, réticulable ou réticulée, de préférence à base d'au moins un élastomère diénique et au moins une couche de l'armature de carcasse étant pourvue sur au moins une face de fils textiles présentant au test dit de perméabilité un débit compris entre 1 et 3 cm³/mn.

Au sens de l'invention, des câbles, à au moins deux couches, au moins une couche interne étant gainée d'une couche constituée d'une composition polymérique présentent au test dit de perméabilité un débit inférieur à 20 cm3/mn et avantageusement inférieur à 2 cm3/mn.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine peut être réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus.

La composition de caoutchouc de la gaine selon l'invention peut comprendre, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

Selon une variante de l'invention, les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, une gaine constituée d'une composition de caoutchouc non réticulable, réticulable ou réticulée à base d'au moins un élastomère diénique, recouvrant, dans la construction [L+M], ladite première couche C1 et, dans la construction [L+M+N], au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas d'hélice représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :
- la couche C3 est une couche saturée, c'est-à-dire qu'il n'existe pas suffisamment de place dans cette couche pour y ajouter au moins un (N+1)ème fil de diamètre d₃, N représentant alors le nombre maximal de fils enroulables en une couche autour de la couche C2 ;
- la gaine de caoutchouc recouvre en outre la couche interne C1 et/ou sépare les fils deux à deux adjacents de la couche intermédiaire C2 ;
- la gaine de caoutchouc recouvre pratiquement la demi-circonférence radialement intérieure de chaque fil de la couche C3, de telle sorte qu'elle sépare les fils deux à deux adjacents de cette couche C3.

De préférence, la gaine de caoutchouc présente une épaisseur moyenne allant de 0,010 mm à 0,040 mm.

D'une manière générale, l'invention peut être mise en oeuvre, pour former les câbles de l'armature de carcasse ci-dessus décrits, avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le câble selon l'invention pourra être obtenu selon différentes techniques connues de l'homme du métier, par exemple en deux étapes, tout d'abord par gainage via une tête d'extrusion de l'âme ou structure intermédiaire L+M (couches C1+C2), étape suivie dans un deuxième temps d'une opération finale de câblage ou retordage des N fils restants (couche C3) autour de la couche C2 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

De tels câbles d'au moins une couche de sommet de travail sont par exemple choisis parmi les câbles décrits dans les demandes de brevet WO 2005/071157, WO 2010/012411, WO 2010/054790 et WO 2010/054791.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 7 qui représentent :
- figure 1, une vue méridienne d'un schéma d'un pneumatique selon l'invention,
- figure 2, une représentation schématique semi-écorchée d'une couche d'armature de carcasse du pneumatique de la figure 1 selon un premier mode de réalisation de l'invention,
- figure 3, une représentation schématique semi-écorchée d'une couche d'armature de carcasse du pneumatique de la figure 1 selon un deuxième mode de réalisation de l'invention,
- figure 4, une représentation schématique semi-écorchée d'une couche d'armature de carcasse du pneumatique de la figure 1 selon un troisième mode de réalisation de l'invention,
- figure 5, une représentation schématique d'une vue en coupe d'un câble d'armature de carcasse du pneumatique de la figure 1,
- figure 6, une représentation schématique d'une vue en coupe d'un premier autre exemple de câble d'armature de carcasse selon l'invention,
- figure 7, une représentation schématique d'une vue en coupe d'un deuxième autre exemple de câble d'armature de carcasse selon l'invention.

Les figures ne sont pas représentées à l'échelle pour en simplifier la compréhension.

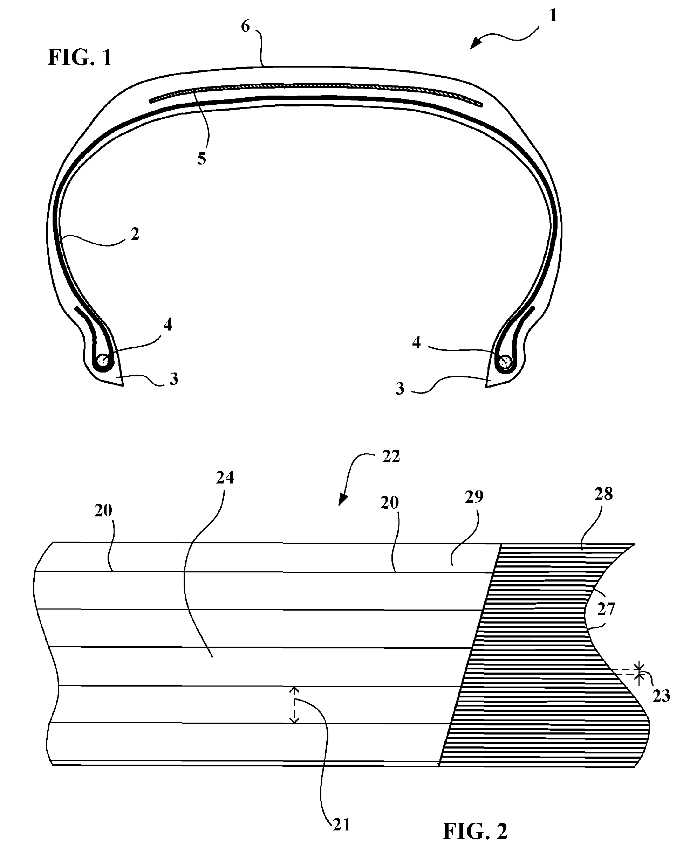

Sur la figure 1, le pneumatique 1, de dimension 315/70 R 22.5, comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6. L'armature de sommet 5 est formée radialement de l'intérieur à l'extérieur :
- d'une première couche de travail formée de câbles métalliques inextensibles 11.35 non frettés, continus sur toute la largeur de la nappe, orientés d'un angle égal à 18°,
- d'une seconde couche de travail formée de câbles métalliques inextensibles 11.35 non frettés, continus sur toute la largeur de la nappe, orientés d'un angle égal à 18° et croisés aux câbles métalliques de la première couche de travail,
- d'une couche de protection formées de câbles métalliques élastiques 6x35.

L'ensemble de ces couches constituant l'armature de sommet 5 n'est pas représenté en détail sur les figures.

La figure 2 illustre une représentation semi-écorchée d'une couche d'armature de carcasse 22 selon un premier mode de réalisation de l'invention. Celle-ci est constituée de câbles métalliques 27 orientés parallèlement les uns par rapport aux autres et maintenus entre deux couches 28, 29 de mélange caoutchouteux, dites de calandrage. Sur la surface « extérieure » (surface qui n'est pas au contact des câbles métalliques) de la couche de calandrage 29 sont mis en place des fils de coton 20 parallèles entre eux et parallèles aux câbles métalliques 27.

Conformément à l'invention, le rapport du pas 21 entre deux fils de coton 20 sur le pas 23 entre les câbles métalliques 27 de la couche de l'armature de carcasse 22 est égal à 16 et donc supérieur à 10.

Les fils de coton 20 sont mis en place sur la surface de la couche d'armature de carcasse 22 qui vient au contact de la tringle 4.

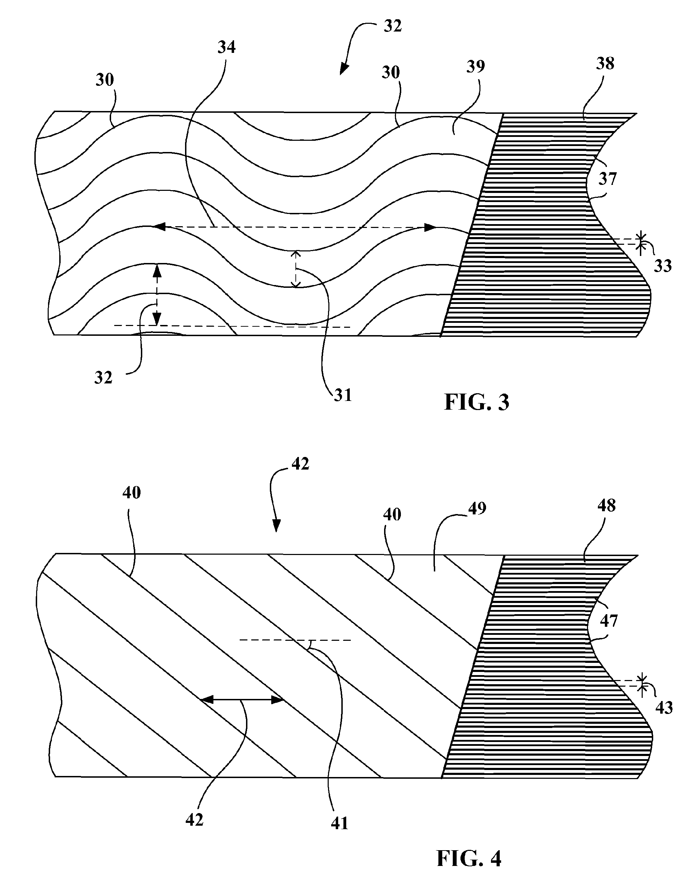

La figure 3 illustre une représentation semi-écorchée d'une couche d'armature de carcasse 32 selon un deuxième mode de réalisation de l'invention. Comme dans le cas de la figure 2, celle-ci est constituée de câbles métalliques 37 orientés parallèlement les uns par rapport aux autres et maintenus entre deux couches 38, 39 de mélange caoutchouteux, dites de calandrage. Sur la surface « extérieure » (surface qui n'est pas au contact des câbles métalliques) de la couche de calandrage 39 sont mis en place des fils de coton 30 qui présentent une ondulation autour d'un axe principal ou moyen orienté parallèlement à la direction des câbles métalliques 37. Conformément à l'invention, le rapport du pas 31 entre deux fils de coton 30 sur l'amplitude d'ondulation 32 est égal à 0.63 et donc compris entre 0.5 et 1.

Le rapport du pas 31 entre deux fils de coton 30 sur le pas 33 entre les câbles métalliques 37 de la couche de l'armature de carcasse 32 est égal à 11 et donc supérieur à 10.

Le rapport de la période d'ondulation 34 sur l'amplitude d'ondulation 32 des fils de coton 30 est égal à 5.4 et donc compris entre 5 et 20.

Comme dans le cas de la figure 2, les fils de coton 30 sont mis en place sur la surface de la couche d'armature de carcasse 32 qui vient au contact de la tringle 4.

La figure 4 illustre une représentation semi-écorchée d'une couche d'armature de carcasse 42 selon l'invention. Celle-ci est constituée de câbles métalliques 47 orientés parallèlement les uns par rapport aux autres et maintenus entre deux couches 48, 49 de mélange caoutchouteux, dites de calandrage. Sur la surface « extérieure » (surface qui n'est pas au contact des câbles métalliques) de la couche de calandrage 49 sont mis en place des fils de coton 40 qui forment un angle 41 avec la direction des câbles métalliques 47 égal à 35°. Conformément à l'invention, l'angle formé par les fils de coton 40 avec la direction des câbles métalliques 47 est supérieur à 10°.

Le rapport du pas 42 entre deux fils textiles, mesuré selon une direction parallèle à la direction des câbles métalliques 47 de la couche d'armature de carcasse 42, sur le pas 43 entre les éléments de renforcement de la couche d'armature de carcasse 42, mesuré selon une direction perpendiculaire à la direction desdits éléments de renforcement de la couche d'armature de carcasse 42, est égal à 22 et donc supérieur à 10 conformément à l'invention.

Comme dans le cas des figures 2 et 3, les fils de coton 40 sont mis en place sur la surface de la couche d'armature de carcasse 42 qui vient au contact de la tringle 4.

Dans les trois modes de réalisations illustrés sur les figures 2, 3 et 4, les fils de coton 20, 30 et 40 présentent un diamètre égal à 0.23 mm.

Les fils de coton20, 30 et 40 présentent au test dit de perméabilité, mesuré tel que décrit précédemment, un débit égal à 2 cm³/mn et donc compris entre 1 et 3 cm³/mn conformément à l'invention.

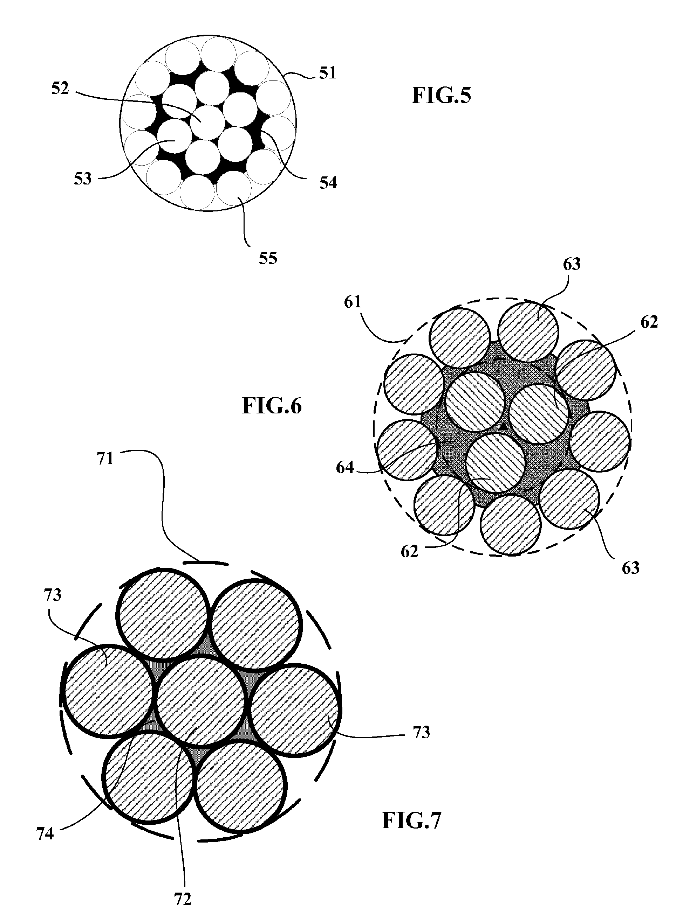

La figure 5 illustre une représentation schématique de la section d'un câble 51 d'armature de carcasse du pneumatique 1 de la figure 1. Ce câble 51 est un câble à couche de structure 1+6+12, non fretté, constitué d'un noyau central formé d'un fil 52, d'une couche intermédiaire formée de six fils 53 et d'une couche externe formée de douze fils 55.

Il présente les caractéristiques suivantes (d et p en mm) :
- structure 1+6+12 ;
- d₁ = 0.20 (mm);
- d₂ = 0.18 (mm);
- p₂ = 10 (mm)
- d₃ = 0.18 (mm);
- p₂ = 10 (mm),
- (d₂/ d₃) = 1 ;
avec d₂, p₂, respectivement le diamètre et le pas d'hélice de la couche intermédiaire et d₃ et p₃, respectivement le diamètre et le pas de d'hélice des fils de la couche externe.

L'âme du câble constitué du noyau central formé du fil 52 et de la couche intermédiaire formée des six fils 53 est gainé par une composition de caoutchouc 54 à base d'élastomère diénique non vulcanisé (à l'état cru). Le gainage est obtenu via une tête d'extrusion de l'âme constituée du fil 52 entouré des six fils 53, suivi d'une opération finale de retordage ou câblage des 12 fils 55 autour de l'âme ainsi gainé.

L'aptitude à la pénétration du câble 51, mesurée selon la méthode décrite précédemment, est égale à 95 %.

La composition élastomérique constituant la gaine de caoutchouc 54 est réalisée à partir d'une composition telle que décrite précédemment et présente dans le cas présent la même formulation, à base de caoutchouc naturel et de noir de carbone, que celle des couches de calandrage 28;29, 38;39, 48;49 de l'armature de carcasse que les câbles sont destinés à renforcer.

La figure 6 illustre une représentation schématique de la section d'un autre câble 61 d'armature de carcasse pouvant être utilisé dans un pneumatique selon l'invention. Ce câble 41 est un câble à couche de structure 3+9, non fretté, constitué d'une âme centrale formée d'un câble constitué de trois fils 62 retordus entre eux et d'une couche externe formée de neuf fils 63.

Il présente les caractéristiques suivantes (d et p en mm) :
- structure 3+9 ;
- d₁ = 0.18 (mm);
- p₂ = 5 (mm)
- (d₁ / d₂) = 1 ;
- d₂ = 0.18 (mm);
- p₂ = 10 (mm),
avec d₁, p1, respectivement le diamètre et le pas d'hélice des fils de l'âme centrale et d₂ et p₂, respectivement le diamètre et le pas de d'hélice des fils de la couche externe.

L'âme centrale constituée d'un câble formé des trois fils 62 a été gainée par une composition de caoutchouc 64 à base d'élastomère diénique non vulcanisé (à l'état cru). Le gainage est obtenu via une tête d'extrusion du câble 62, suivi d'une opération finale de câblage des 9 fils 63 autour de l'âme ainsi gainée.

L'aptitude à la pénétration du câble 61, mesurée selon la méthode décrite précédemment, est égale à 95 %.

La figure 7 illustre une représentation schématique de la section d'un autre câble 71 d'armature de carcasse pouvant être utilisé dans un pneumatique selon l'invention. Ce câble 71 est un câble à couche de structure 1+6, non fretté, constitué d'un noyau central formé d'un fil 72 et d'une couche externe formée de six fils 73.

Il présente les caractéristiques suivantes (d et p en mm) :
- structure 1+6 ;
- d₁ = 0,200 (mm);
- (d₁/ d₂) = 1,14 ;
- d₂ = 0,175 (mm);
- P₂ = 10 (mm),
avec d₁, le diamètre du noyau et d₂ et p₂, respectivement le diamètre et le pas d'hélice des fils de la couche externe.

Le noyau central constitué du fil 72 a été gainée par une composition de caoutchouc 74 à base d'élastomère diénique non vulcanisé (à l'état cru). Le gainage est obtenu via une tête d'extrusion du fil 72, suivi d'une opération finale de câblage des 6 fils 73 autour du noyau ainsi gainé.

L'aptitude à la pénétration du câble 71, mesurée selon la méthode décrite précédemment, est égale à 95 %.

Des essais ont été réalisés avec des pneumatiques réalisés selon l'invention conformément à la représentation des figures 1, 2 et 5, et d'autres avec deux types de pneumatiques dits de référence.

Les premiers pneumatiques de référence R1 diffèrent des pneumatiques selon l'invention par des câbles 51 de l'armature de carcasse ne comportant pas la couche de gainage 54 et ne comportant pas de fils de coton sur la surface de la couche d'armature de carcasse.

Les deuxièmes pneumatiques de référence R2 diffèrent des pneumatiques selon l'invention par la présence de fils de coton sur la surface de la couche d'armature de carcasse présentant des diamètres égaux à 0.37 mm et présentant au test dit de perméabilité, mesuré tel que décrit précédemment, un débit égal à 4.2 cm³/mn.

Des essais d'endurance en roulage sur volant ont été réalisés sur une machine de tests imposant aux pneumatiques une charge de 4415 daN et une vitesse de 40 km/h, avec un gonflage des pneumatiques dopé en oxygène. Les essais ont été réalisés pour les pneumatiques selon l'invention avec des conditions identiques à celles appliquées aux pneumatiques de référence. Les roulages sont arrêtés dès que les pneumatiques présentent des dégradations de l'armature de carcasse.

Les essais ainsi réalisés ont montré que les distances parcourues avec les pneumatiques de référence R2 et les pneumatiques selon l'invention sont équivalentes et totalisent 300000 km alors que les pneumatiques de référence R1 n'ont parcourus que 250 000 km.

D'autres essais d'endurance en roulage sur essieu moteur de véhicule ont été réalisés en imposant aux pneumatiques une charge de 3680 daN et une vitesse de 40 km/h, avec un gonflage des pneumatiques de 0.2 bar. Les essais ont été réalisés pour les pneumatiques selon l'invention avec des conditions identiques à celles appliquées aux pneumatiques de référence. Les roulages sont menés sur une distance de 12 000 km ou sont arrêtés dès que les pneumatiques présentent des dégradations de l'armature de carcasse.

Les essais ainsi réalisés ont montré que les distances parcourues lors de chacun de ces tests avec les pneumatiques de référence R2 et les pneumatiques selon l'invention ont toujours permis d'atteindre les 12 000 km alors que les pneumatiques de référence R1 n'ont parcourus au maximum que 10 000 km.

Ces deux premiers essais représentatifs de conditions d'utilisation des pneumatiques mettent en évidence que la présence des câbles 51 de l'armature de carcasse comportant une couche de gainage 54 associés à des fils de coton présents sur la surface de la couche d'armature de carcasse conduisent à une amélioration de l'endurance des pneumatiques.

Un troisième essai correspondant à des conditions sévères d'utilisation des pneumatiques a été réalisé. Ces essais sont également réalisés avec les pneumatiques selon l'invention et les pneumatiques de référence R2. Après une phase préalable d'étuvage de douze 12 semaines sous une atmosphère d'oxygène pur, les pneumatiques sont roulés sur un volant dans des conditions de charge 20% supérieures à la charge nominale et de gonflage 20% supérieures à la pression nominale.

Les essais ainsi réalisés ont montré que les distances parcourues lors de cet essai avec les pneumatiques de référence R2 sont 15 % inférieures à celles obtenues avec les pneumatiques selon l'invention.

Ces résultats mettent en évidence que la diminution du débit mesuré selon le test dit de perméabilité des fils de coton mis en place sur la surface de la couche d'armature de carcasse permettent de retrouver des performances en termes d'endurance semblables à celles des pneumatiques usuels, notamment dans des conditions de roulage particulièrement sévères.

## Revendications

1. Pneumatique (1) à armature de carcasse radiale, constituée d'au moins une couche (2) d'éléments de renforcement métalliques (27, 37, 47), ledit pneumatique comprenant une armature de sommet (5), elle-même coiffée radialement d'une bande de roulement (6), ladite bande de roulement étant réunie à deux bourrelets (3) par l'intermédiaire de deux flancs, les éléments de renforcement métalliques (27, 37, 47) d'au moins une couche de l'armature de carcasse étant des câbles présentant au test dit de perméabilité un débit inférieur à 20 cm³/mn, **caractérisé en ce qu'**au moins une couche (2) de l'armature de carcasse est pourvue sur au moins une face de fils textiles (20, 30, 40) présentant au test dit de perméabilité un débit compris entre 1 et 3 cm³/mn.

2. Pneumatique (1) selon la revendication 1, **caractérisé en ce que** les éléments de renforcement métalliques (27, 37, 47) d'au moins une couche (2) de l'armature de carcasse sont des câbles (51, 61, 71) à au moins deux couches et **en ce qu**'au moins une couche interne est gainée d'une couche (54, 64, 74) constituée d'une composition polymérique telle qu'une composition de caoutchouc non réticulable, réticulable ou réticulée, de préférence à base d'au moins un élastomère diénique.

3. Pneumatique (1) selon l'une des revendications 1 ou 2, **caractérisé en ce que** les éléments de renforcement métalliques (27, 37, 47) d'au moins une couche de l'armature de carcasse présentent au test dit de perméabilité un débit inférieur à 10 cm³/mn et de préférence inférieur à 2 cm³/mn

4. Pneumatique (1) selon l'une des revendications précédentes, **caractérisé en ce que** les fils textiles (20, 30, 40) présentent un diamètre compris entre 0.2 et 0.35 mm.

5. Pneumatique (1) selon l'une des revendications précédentes, **caractérisé en ce que** les fils textiles (20) présentant au test dit de perméabilité un débit compris entre 1 et 3 cm³/mn sont parallèles entre eux et orientés selon une direction parallèle à celle des éléments de renforcement métalliques (27) de ladite au moins une couche (22) de l'armature de carcasse.

6. Pneumatique (1) selon l'une des revendications 1 à 4, **caractérisé en ce que** les fils textiles (30) présentant au test dit de perméabilité un débit compris entre 1 et 3 cm³/mn sont orientés principalement selon une direction parallèle à celle des éléments de renforcement métalliques (37) de ladite au moins une couche (32) de l'armature de carcasse et **en ce que** lesdits fils textiles (30) sont ondulés autour de cette direction principale.

7. Pneumatique (1) selon l'une des revendications 1 à 4, **caractérisé en ce que** les fils textiles (40) présentant au test dit de perméabilité un débit compris entre 1 et 3 cm³/mn sont orientés principalement selon une direction rectilignes et **en ce que** lesdits fils textiles (40) forment un angle avec la direction des éléments de renforcement métalliques (47) de ladite au moins une couche (42) de l'armature de carcasse supérieur à 10°.

8. Pneumatique (1) selon l'une des revendications précédentes, **caractérisé en ce que** les éléments de renforcement métalliques (27, 37, 47) d'au moins une couche (2) de l'armature de carcasse sont des câbles métalliques à couches (51, 61, 71) de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice selon un pas p₂ avec M allant de 3 à 12, ladite couche C2 étant éventuellement entourée d'une couche externe C3 de N fils de diamètre d₃ enroulés ensemble en hélice selon un pas p₃ avec N allant de 8 à 20, et **en ce qu'**une gaine (54, 64, 74) constituée d'une composition de caoutchouc réticulable ou réticulée à base d'au moins un élastomère diénique, recouvre, dans la construction [L+M], ladite première couche C1 et, dans la construction [L+M+N], au moins ladite couche C2.

9. Pneumatique (1) selon la revendication 8, **caractérisé en ce que** le diamètre des fils de la première couche (C1) est compris entre 0.15 et 0.5 mm, et **en ce que** le diamètre des fils des couches (C2, C3) est compris entre 0.15 et 0.5 mm.

10. Pneumatique (1) selon l'une des revendications précédentes, **caractérisé en ce que** l'armature de sommet (5) est formée d'au moins deux couches de sommet de travail d'éléments de renforcement inextensibles, croisés d'une couche à l'autre en faisant avec la direction circonférentielle des angles compris entre 10° et 45°.

11. Pneumatique (1) selon l'une des revendications précédentes, **caractérisé en ce que** l'armature de sommet (5) comporte encore au moins une couche d'éléments de renforcement circonférentiels.

12. Pneumatique (1) selon l'une des revendications précédentes, **caractérisé en ce que** l'armature de sommet (5) est complétée radialement à l'extérieur par au moins une nappe supplémentaire, dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

13. Pneumatique (1) selon l'une des revendications précédentes, **caractérisé en ce que** l'armature de sommet (5) comporte en outre une couche de triangulation formée d'éléments de renforcement métalliques faisant avec la direction circonférentielle des angles supérieurs à 60°.

## Patentansprüche

1. Luftreifen (1) mit radialer Karkassenbewehrung, die aus mindestens einer Schicht (2) metallischer Verstärkungselemente (27, 37, 47) besteht, wobei der Luftreifen eine Scheitelbewehrung (5) umfasst, die selbst radial von einer Lauffläche (6) bedeckt wird, wobei die Lauffläche mit zwei Wülsten (3) mittels zweier Flanken verbunden ist, wobei die metallischen Verstärkungselemente (27, 37, 47) mindestens einer Schicht der Karkassenbewehrung Kabel sind, die in dem sogenannten Permeabilitätstest einen Durchsatz von weniger als 20 cm³/mn aufweisen, **dadurch gekennzeichnet, dass** mindestens eine Schicht (2) der Karkassenbewehrung an mindestens einer Fläche mit Textilfäden (20, 30, 40) versehen ist, die in dem sogenannten Permeabilitätstest einen Durchsatz zwischen 1 und 3 cm³/mn aufweisen.

2. Luftreifen (1) nach Anspruch 1,
**dadurch gekennzeichnet, dass** die metallischen Verstärkungselemente (27, 37, 47) mindestens einer Schicht (2) der Karkassenbewehrung Kabel (51, 61, 71) mit mindestens zwei Schichten sind, und dass mindestens eine innere Schicht mit einer Schicht (54, 64, 74) umhüllt ist, die aus einer PolymerZusammensetzung, wie einer nicht-vernetzbaren, vernetzbaren oder vernetzten Kautschuk-Zusammensetzung, vorzugsweise auf der Basis mindestens eines Dien-Elastomers, besteht.

3. Luftreifen (1) nach einem der Ansprüche 1 oder 2,
**dadurch gekennzeichnet, dass** die metallischen Verstärkungselemente (27, 37, 47) mindestens einer Schicht der Karkassenbewehrung im sogenannten Permeabilitätstest einen Durchsatz von weniger als 10 cm³/mn und vorzugsweise weniger als 2 cm³/mn aufweisen.

4. Luftreifen (1) nach einem der vorhergehenden Ansprüche,
**dadurch gekennzeichnet, dass** die Textilfäden (20, 30, 40) einen Durchmesser zwischen 0,2 und 0,35 mm aufweisen.

5. Luftreifen (1) nach einem der vorhergehenden Ansprüche,
**dadurch gekennzeichnet, dass** die Textilfäden (20), die in den sogenannten Permeabilitätstest einen Durchsatz zwischen 1 und 3 cm³/mn aufweisen, zueinander parallel und in einer Richtung parallel zu jener der metallischen Verstärkungselemente (27) der mindestens einen Schicht (22) der Karkassenbewehrung orientiert sind.

6. Luftreifen (1) nach einem der Ansprüche 1 bis 4,
**dadurch gekennzeichnet, dass** die Textilfäden (30), die in dem sogenannten Permeabilitätstest einen Durchsatz zwischen 1 und 3 cm³/mn aufweisen, hauptsächlich in einer Richtung parallel zu jener der metallischen Verstärkungselemente (37) der mindestens einen Schicht (32) der Karkassenbewehrung orientiert sind, und dass die Textilfäden (30) rund um diese Hauptrichtung gewellt sind.

7. Luftreifen (1) nach einem der Ansprüche 1 bis 4,
**dadurch gekennzeichnet, dass** die Textilfäden (40), die in dem sogenannten Permeabilitätstest einen Durchsatz zwischen 1 und 3 cm³/mn aufweisen, hauptsächlich in einer geraden Richtung orientiert sind, und dass die Textilfäden (40) einen Winkel mit der Richtung der metallischen Verstärkungselemente (47) der mindestens einen Schicht (42) der Karkassenbewehrung von mehr als 10° bilden.

8. Luftreifen (1) nach einem der vorhergehenden Ansprüche,
**dadurch gekennzeichnet, dass** die metallischen Verstärkungselemente (27, 37, 47) der mindestens einen Schicht (2) der Karkassenbewehrung Metallkabel (51, 61, 71) mit Aufbauschichten [L + M] oder [L + M + N] sind, die als Verstärkungselement einer Karkassenbewehrung eines Luftreifens verwendbar sind, umfassend eine erste Schicht C1 mit L Drähten mit einem Durchmesser d₁, wobei L 1 bis 4 ist, die von mindestens einer Zwischenschicht C2 mit M Drähten mit einem Durchmesser d₂ umgeben ist, welche zusammen schraubenförmig gemäß einer Steigung p₂ gewickelt sind, wobei M 3 bis 12 ist, wobei die Schicht C2 schließlich von einer äußeren Schicht C3 mit N Drähten mit einem Durchmesser d₃ umgeben ist, die zusammen schraubenförmig gemäß einer Steigung p₃ gewickelt sind, wobei N 8 bis 20 ist, und dass eine Hülle (54, 64, 74), die aus einer vernetzbaren oder vernetzten Kautschuk-Zusammensetzung auf der Basis mindestens eines Dien-Elastomers besteht, in dem Aufbau [L + M], die erste Schicht C1 und, in dem Aufbau [L + M + N], mindestens die Schicht C2 bedeckt.

9. Luftreifen (1) nach Anspruch 8,
**dadurch gekennzeichnet, dass** der Durchmesser der Drähte der ersten Schicht (C1) zwischen 0,15 und 0,5 mm liegt, und dass der Durchmesser der Drähte der Schichten (C2, C3) zwischen 0,15 und 0,5 mm liegt.

10. Luftreifen (1) nach einem der vorhergehenden Ansprüche,
**dadurch gekennzeichnet, dass** die Scheitelbewehrung (5) aus mindestens zwei Arbeitsscheitelschichten undehnbarer Verstärkungselemente gebildet ist, die sich von einer Schicht zur anderen kreuzen, indem sie mit der Umfangsrichtung Winkel zwischen 10° und 45° bilden.

11. Luftreifen (1) nach einem der vorhergehenden Ansprüche,
**dadurch gekennzeichnet, dass** die Scheitelbewehrung (5) außerdem mindestens eine Schicht von Umfangsverstärkungselementen umfasst.

12. Luftreifen (1) nach einem der vorhergehenden Ansprüche,
**dadurch gekennzeichnet, dass** die Scheitelbewehrung (5) radial außen durch mindestens eine zusätzliche sogenannte Schutzlage aus sogenannten elastischen Verstärkungselementen vervollständigt wird, die in Bezug auf die Umfangsrichtung mit einem Winkel orientiert sind, der zwischen 10° und 45° liegt und die gleiche Richtung hat wie der Winkel, der durch die undehnbaren Elemente der Arbeitslage gebildet wird, die ihr radial benachbart ist.

13. Luftreifen (1) nach einem der vorhergehenden Ansprüche,
**dadurch gekennzeichnet, dass** die Scheitelbewehrung (5) außerdem eine Triangulationsschicht umfasst, die aus metallischen Verstärkungselementen gebildet ist, welche mit der Umfangsrichtung Winkel von mehr als 60° bilden.

## Claims

1. Tyre (1) having a radial carcass reinforcement, composed of at least one layer (2) of metal reinforcing elements (27, 37, 47), the said tyre comprising a crown reinforcement (5), itself topped radially by a tread (6), the said tread being joined to two beads (3) via two sidewalls, the metal reinforcing elements (27, 37, 47) of at least one layer of the carcass reinforcement being cords exhibiting, in the "permeability" test, a flow rate of less than 20 cm³/min, **characterized in that** at least one layer (2) of the carcass reinforcement is provided, on at least one face, with textile threads (20, 30, 40) exhibiting, in the "permeability" test, a flow rate of between 1 and 3 cm³/min.

2. Tyre (1) according to Claim 1, **characterized in that** the metal reinforcing elements (27, 37, 47) of at least one layer (2) of the carcass reinforcement are cords (51, 61, 71) comprising at least two layers and **in that** at least one inner layer is sheathed with a layer (54, 64, 74) consisting of a polymer composition, such as a non-crosslinkable, crosslinkable or crosslinked rubber composition, preferably based on at least one diene elastomer.

3. Tyre (1) according to either of Claims 1 and 2, **characterized in that** the metal reinforcing elements (27, 37, 47) of at least one layer of the carcass reinforcement exhibit, in the "permeability" test, a flow rate of less than 10 cm³/min and preferably of less than 2 cm³/min.

4. Tyre (1) according to one of the preceding claims, **characterized in that** the textile threads (20, 30, 40) exhibit a diameter of between 0.2 and 0.35 mm.

5. Tyre (1) according to one of the preceding claims, **characterized in that** the textile threads (20) exhibiting, in the "permeability" test, a flow rate of between 1 and 3 cm³/min are parallel to one another and oriented along a direction parallel to that of the metal reinforcing elements (27) of the said at least one layer (22) of the carcass reinforcement.

6. Tyre (1) according to one of Claims 1 to 4, **characterized in that** the textile threads (30) exhibiting, in the "permeability" test, a flow rate of between 1 and 3 cm³/min are oriented mainly along a direction parallel to that of the metal reinforcing elements (37) of the said at least one layer (32) of the carcass reinforcement and **in that** the said textile threads (30) are undulating around this main direction.

7. Tyre (1) according to one of Claims 1 to 4, **characterized in that** the textile threads (40) exhibiting, in the "permeability" test, a flow rate of between 1 and 3 cm³/min are oriented mainly along a straight direction and **in that** the said textile threads (40) form an angle with the direction of the metal reinforcing elements (47) of the said at least one layer (42) of the carcass reinforcement which is greater than 10°.

8. Tyre (1) according to one of the preceding claims, **characterized in that** the metal reinforcing elements (27, 37, 47) of at least one layer (2) of the carcass reinforcement are layered metal cords (51, 61, 71) of [L+M] or [L+M+N] construction which can be used as reinforcing element of a tyre carcass reinforcement, comprising a first layer C1 having L threads of diameter d₁ with L ranging from 1 to 4, surrounded by at least one intermediate layer C2 having M threads of diameter d₂ wound together in a helix according to a pitch p₂ with M ranging from 3 to 12, the said layer C2 optionally being surrounded by an outer layer C3 of N threads of diameter d₃ wound together in a helix according to a pitch p₃ with N ranging from 8 to 20, and **in that** a sheath (54, 64, 74) composed of a crosslinkable or crosslinked rubber composition based on at least one diene elastomer covers, in the construction [L+M], the said first layer C1 and, in the construction [L+M+N], at least the said layer C2.

9. Tyre (1) according to Claim 8, **characterized in that** the diameter of the threads of the first layer (C1) is between 0.15 and 0.5 mm and **in that** the diameter of the threads of the layers (C2, C3) is between 0.15 and 0.5 mm.

10. Tyre (1) according to one of the preceding claims, **characterized in that** the crown reinforcement (5) is formed of at least two working crown layers of inextensible reinforcing elements, crossed from one layer to the other, forming, with the circumferential direction, angles of between 10° and 45°.

11. Tyre (1) according to one of the preceding claims, **characterized in that** the crown reinforcement (5) also comprises at least one layer of circumferential reinforcing elements.

12. Tyre (1) according to one of the preceding claims, **characterized in that** the crown reinforcement (5) is supplemented radially on the outside by at least one additional ply, known as protective ply, of "elastic" reinforcing elements, which are oriented, with respect to the circumferential direction, with an angle of between 10° and 45° and in the same direction as the angle formed by the inextensible elements of the working ply radially adjacent to it.

13. Tyre (1) according to one of the preceding claims, **characterized in that** the crown reinforcement (5) additionally comprises a triangulation layer formed of metal reinforcing elements forming, with the circumferential direction, angles greater than 60°.
